# EUROPÄISCHE PATENTSCHRIFT

(11) **EP 3 171 117 B1**
(45) Veröffentlichungstag und Bekanntmachung des Hinweises auf die Patenterteilung: **09.05.2018**
(21) Anmeldenummer: 16002397.4
(22) Anmeldetag: 11.11.2016
(51) Int. Cl.: F28F 27/00, F28D 19/04

(54) **REGENERATIVER WÄRMEÜBERTRAGER MIT VERBESSERTEM DICHTRAHMEN**
REGENERATIVE HEAT EXCHANGER WITH IMPROVED SEALING FRAME
ÉCHANGEUR DE CHALEUR RÉGÉNÉRATIF COMPRENANT UN JOINT AMÉLIORÉ

(30) Priorität: 23.11.2015 DE 102015015133
(43) Veröffentlichungstag der Anmeldung: 24.05.2017
(73) Patentinhaber: Balcke-Dürr GmbH, 40472 Düsseldorf (DE)
(72) Erfinder: Krenzel, Raymond, 51671 Wiehl (DE); Kirsche, Armin, 02899 Schönau (DE)
(74) Vertreter: Heidler, Philipp

(56) Entgegenhaltungen:
- EP-A1- 2 458 315
- DE-A1- 1 451 274
- US-A1- 2011 061 831

## Beschreibung

Die vorliegende Erfindung betrifft einen regenerativen Wärmeübertrager nach dem Oberbegriff der Ansprüche 1 und 3. Solch ein Wärmetauscher ist bekannt aus DE 1 451 274.

Regenerative Wärmeübertrager wie beispielsweise Regenerativ-Luftvorwärmer werden in verschiedenen Typen von Dampfkraftwerken dazu eingesetzt, die verbleibende thermische Energie eines Rauchgases beim Verlassen eines Kessels zur Aufheizung der dem Kessel zugeführten Verbrennungsluft zu nutzen und somit die Effizienz des Kraftwerks zu steigern. Bevorzugt werden hierbei ein Rauchgasstrom und wenigstens ein Luftstrom oder Verbrennungsluftstrom, nach dem Ljungström-Prinzip in entgegengesetzter Richtung, durch eine innerhalb eines statischen Gehäuses rotierende Zwischenspeichermasse von im Wesentlichen zylindrischer Form geführt. Die rotierende Zwischenspeichermasse, auch Rotor genannt, transportiert Wärmeenergie vom Rauchgassektor zu wenigstens einem Luftsektor.

Neben der Wärmeleistung des regenerativen Wärmeübertragers hat die anfallende Leckage von Verbrennungsluft ins Rauchgas einen entscheidenden Einfluss auf die Effizienz des Wärmeübertragers. Ein wesentlicher Teil dieser Leckage besteht aus Verbrennungsluft, die an den radialen Grenzen von Luftsektor und Rauchgassektor aufgrund der Druckdifferenz zwischen beiden Gasen ins Rauchgas strömt. Zur Vermeidung dieser Leckage werden an den Radialholmen des Gehäuses sogenannte Dichtrahmen eingesetzt, die als Radialdichtungen wirken sollen.

Üblicherweise bestehen diese Dichtrahmen jeweils aus einer ortsfest am Gehäuse befestigten Platte, die sich prinzipiell ausgehend vom Zentrum des Rotors in radialer Richtung zum Rand des Rotors hin erstreckt und die in Kombination mit am Rotor befestigten Streifblechen oder Dichtstegen ein Abdichten von Luft- und Rauchgassektor bewirkt. Dichtrahmen sind üblicherweise sowohl auf Ober- als auch Unterseite des Rotors vorhanden. Eine besondere Anforderung an den Dichtrahmen ergibt sich daraus, dass sich der Rotor im Betrieb unter Temperatureinfluss verformt. Da die Temperatur des Rotors an der Oberseite höher ist als an der Unterseite und er sich somit oben stärker ausdehnt als an der Unterseite, biegt sich der Rotor im Betrieb. Diese Durchbiegung in axialer Richtung kann als Funktion der radialen Position beschrieben werden, abhängig vom thermischen Expansionskoeffizienten α des Rotors sowie von den lokalen Temperaturen des Rotors, die zu Näherungszwecken gleichgesetzt werden können mit den mittleren Temperaturen der jeweiligen Gasströme (Lufteinstrom, Luftausstrom, Gaseinstrom und Gasausstrom). Als Folge ändert sich mit zunehmender Betriebstemperatur die Höhe des Dichtspalts zwischen Rotor und Dichtrahmen, und eine lokale Vergrößerung des Dichtspalts um mehrere Zentimeter ist nicht ungewöhnlich. Um dies zu korrigieren, wird die Position des Dichtrahmens üblicherweise nachgeregelt. Dazu kommen nach derzeitigem Stand der Technik grundsätzlich zwei Methoden zum Einsatz, die nachstehend beschrieben sind.

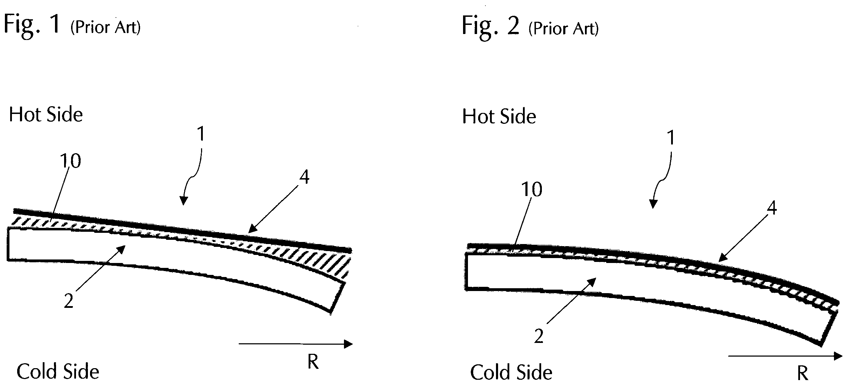

In einer ersten Variante wird ein starrer Dichtrahmen (auch Sektorplatte genannt) eingesetzt, der im Betrieb in Axialrichtung gekippt werden kann. Dies ist beispielhaft in Figur 1 dargestellt, die einen regenerativen Luftvorwärmer 1 als Beispiel einer Wärmeübertrager-Vorrichtung zeigt. Dargestellt ist lediglich eine Teilansicht mit einer Hälfte eines Rotors 2 im Querschnitt in Radialrichtung R. Der Rotor 2 hat sich im Betrieb verbogen und von der in der Figur oben angeordneten Heißseite weg verformt, so dass der Außenrandbereich des Rotors 2, in der Figur rechts dargestellt, in Richtung der Rotationsachse des Rotors 2 weiter nach unten hängt als der Innenrandbereich des Rotors, in der Figur links. Oberhalb des Rotors 2 ist ein Dichtrahmen 4 angeordnet, der sich in Radialrichtung zwischen einem Rauchgassektor und einem Luftsektor des Luftvorwärmers erstreckt und verhindern soll, dass Verbrennungsluft an den radialen Grenzen vom Luftsektor in den Rauchgassektor übertritt. Wie jedoch der Figur zu entnehmen ist, kann durch das bloße Verkippen des starren Dichtrahmens der Dichtspalt 10 zwischen Rotor 2 und Dichtrahmen 4 nicht ausreichend verschlossen werden, so dass in diesem Fall der Übertritt von Verbrennungsluft nicht ausreichend verhindert werden kann. Zwar werden am Rotor in der Regel sogenannte Streifbleche als Ausgleichselemente angebracht, die gegen die Sektorplatte dichten und die so ausgerichtet werden, dass sie im Hauptbetriebszustand bei Verformung des Rotors eine gerade Linie bilden - also beispielsweise dann, wenn der Rotor unter maximaler Last arbeitet. Allerdings lässt sich mit dieser Methode nur für den maximalen Lastzustand ein minimaler Dichtspalt einstellen, in allen anderen Lastzuständen ist das Dichtverhalten suboptimal. Entsprechende Konstruktionen sind beispielsweise in US 2011/0061831 A1, US 2002/0112843 A1, US 6,155,209 A, US 6,119,764 A und US 4,673,026 A beschrieben.

In einer zweiten Variante kommt ein verstellbarer Dichtrahmen mit einer Vielzahl über den Radius verteilten Stellpunkten zum Einsatz. Dies ist beispielhaft in Figur 2 dargestellt, die die gleiche Detailansicht wie Figur 1 zeigt. An den verschiedenen Stellpunkten kann der Dichtrahmen verformt werden, um über den gesamten Radius in jedem Betriebszustand einen minimalen Dichtspalt zu erreichen. Diese Verformung kann beispielsweise über eine mechanische Verstelleinrichtung wie etwa einen Verstellzylinder erreicht werden. Die Verstelleinrichtungen sind in Figur 2 nicht dargestellt. Nachteil dieser Variante sind einerseits der erhöhte Investitionsaufwand sowie die komplizierte Regelung der Vielzahl an Stellpunkten. Abhängig von der Aufhängung des Dichtrahmens kann als weiterer Nachteil noch hinzukommen, dass zwischen den einzelnen Stellpunkten ein "Durchhängen" des Dichtrahmens auftritt, dieser also mit anderen Worten zwischen den einzelnen Verstelleinrichtung in Radialrichtung gesehen nicht zwingend eine stetig steigende oder stetig fallende Kurve beschreibt und daher der Form des verbogenen Rotors nicht optimal folgt. Um dies zu verhindern, wird üblicherweise die Anzahl der Verstelleinrichtungen noch weiter erhöht, was mit erheblichen Kostensteigerungen und einem gesteigerten Wartungsaufwand einhergeht. Eine derartige Konstruktion mit einer Vielzahl von Stellpunkten ist beispielsweise in der EP 2458315 A1 der Anmelderin beschrieben. Hier ist zusätzlich noch ein System aus Laufrollen vorgesehen, mit denen der Dichtrahmen auf dem Rotor aufliegt und die einen Minimalabstand zwischen Rotor und Dichtrahmen sicherstellen.

Aus der Aufzählung der jeweiligen Nachteile wird jedoch schnell ersichtlich, dass keine der bisher eingesetzten Methoden bereits eine optimale Lösung darstellt, so dass in jedem Fall noch Potenzial für weitere Verbesserungen des Dichtrahmens besteht. Es ist daher die Aufgabe der vorliegenden Erfindung, einen regenerativen Wärmeübertrager anzugeben, der eine möglichst gute Anpassung des Dichtspaltes zwischen Rotor und Dichtrahmen bei unterschiedlichen Lastzuständen erlaubt, wobei insbesondere die vorstehend beschriebenen Nachteile der bisher bekannten Lösungen vermieden werden sollen, ohne den konstruktiven Aufwand stark zu erhöhen.

Die Lösung gelingt mit einem regenerativen Wärmeübertrager gemäß den unabhängigen Ansprüchen 1 und 3. Bevorzugte Weiterbildungen sind in den abhängigen Ansprüchen wiedergegeben.

In einem ersten Aspekt betrifft die Erfindung also einen regenerativen Wärmeübertrager mit einem als Rotor ausgebildeten Wärmespeicher, der um eine zentrale Drehachse drehbar gelagert ist, einem den Rotor umgebenden stationären Gehäuse und Dichtmitteln für den Rotor, umfassend wenigstens einen in Radialrichtung des Rotors verlaufenden und sich zu einer Außenseite des Rotors hin verbreiternden, eine Versteifungseinrichtung aufweisenden Dichtrahmen, der insbesondere zwischen einem Rauchgassektor und einem Luftsektor angeordnet ist, und mit einem Verstellsystem zum Einstellen eines Abstandes zwischen dem Dichtrahmen und dem Rotor, wobei das Verstellsystem wenigstens zwei mit dem Dichtrahmen verbundene Verstelleinrichtungen zum Biegen des Dichtrahmens in Axialrichtung umfasst. Erfindungsgemäß ist die Versteifungseinrichtung so ausgebildet ist, dass das Flächenträgheitsmoment des Dichtrahmens in dessen radialer Richtung im Wesentlichen konstant ist, und dass die wenigstens zwei Verstelleinrichtungen zum Biegen des Dichtrahmens in Axialrichtung in einander entgegengesetzten Richtungen verstellbar sind.

Der Erfindung liegt die Erkenntnis zugrunde, dass sich der Dichtspalt zwischen Dichtrahmen und Rotoroberfläche in besonders einfacher Weise einstellen und konstant gering halten lässt, wenn das Flächenträgheitsmoment des Dichtrahmen derart angelegt ist, dass es ein Biegen des Dichtrahmens entsprechend dem thermischen Biegeverhalten des Rotors unter den zu erwartenden Temperaturen und Drücken im Betrieb entspricht oder zumindest angenähert ist. Durch die nun erstmals herangezogene Größe des Flächenträgheitsmoments gelingt es, ein Biegeverhalten des Dichtrahmens zu erhalten, das mit nur sehr wenigen Verstelleinrichtungen eine optimal an die Verformung des Rotors angepasste Verbiegung des Dichtrahmens erlaubt. Wenn sich der Dichtrahmen in seiner radialen Erstreckung in ähnlicher Weise verformen lässt wie der Rotor, ist lediglich eine geringe Nachjustierung des Dichtspaltes notwendig, und diese Nachjustierung muss nur an sehr wenigen Stellpunkten erfolgen, da es aufgrund des Biegeverhaltens des Dichtrahmens nicht zu einem Durchhängen kommt, wie dies im Stand der Technik beobachtet wurde. Insbesondere gelingt mit der Erfindung somit eine besonders gute Einstellung der Biegung des Dichtrahmens hin zu einer stetig steigenden oder stetig fallenden Kurve, insbesondere angepasst an die Biegung des Rotors, und das mit nur sehr wenigen Stellvorrichtungen. Da also nur sehr wenige Stellvorrichtungen zur Einstellung des Dichtspalts benötigt werden, verringert dies nicht nur den konstruktiven Aufwand und die Kosten bei der Herstellung des Wärmeübertragers, sondern minimiert auch den Rechenaufwand sowie die Nachjustage während des Betriebs und reduziert die Anfälligkeit für Fehlfunktionen. Um eine optimale Biegung des Dichtrahmens zu ermöglichen, ist es erfindungsgemäß ferner vorgesehen, dass die wenigstens zwei Verstelleinrichtungen zum Biegen des Dichtrahmens in Axialrichtung in einander entgegengesetzte Richtungen verstellbar sind. Die beiden in Radialrichtung zueinander beabstandeten Verstelleinrichtungen können den Dichtrahmen somit einander entgegengesetzt zumindest anteilig in Axialrichtung der Rotationsachse des Rotors auf Druck und auf Zug belasten. Dies erlaubt eine optimale Biegung des Dichtrahmens, wobei der Dichtrahmen dabei nach außen hin in Axialrichtung verbogen wird und somit im Ergebnis in einer Referenzebene, in der die Rotationsachse des Rotors und die in Radialrichtung verlaufende Längsachse des Dichtrahmens liegen, eine gebogene Form annimmt. Diese kontrollierte und im Wesentlichen gleichmäßig in Radialrichtung des Dichtrahmens verlaufende Verbiegung des Dichtrahmens mit vergleichsweise wenigen Verstelleinrichtungen ist wesentlich auf die in Radialrichtung im Wesentlichen konstante Auslegung des Flächenträgheitsmomentes des Dichtrahmens zurückzuführen.

Die Berechnung des Flächenträgheitsmoments und die Dimensionierung des Dichtrahmens können auf der Basis des Steinerschen Satzes zur Berechnung des Trägheitsmoments starrer Körper erfolgen. Dabei hat sich gezeigt, dass eine sehr gute Korrelation des Biegeverhaltens von Rotor und Dichtrahmen bereits erreicht werden kann, wenn für den Dichtrahmen ein in radialer Richtung im Wesentlichen konstantes Flächenträgheitsmoment angenommen wird. Ausgegangen wird dabei von einem Dichtrahmen, der mit seinem der Drehachse des Rotors benachbarten, innenliegenden Ende, nachfolgend als Kopfseite bezeichnet, am Gehäuserahmen der sogenannten Kernabdichtung befestigt ist. Hier befindet sich auch die in der Draufsicht auf die Oberfläche des Dichtrahmens schmalste Stelle, während sich der Dichtrahmen nach außen hin verbreitert und sich die breiteste Stelle an der sogenannten Fußseite befindet, also benachbart zum Außenrand des Rotors. Um zu einem gleichmäßigen Flächenträgheitsmoment des Dichtrahmens über dessen radiale Erstreckung zu kommen, muss der Widerstand gegen eine Verbiegung in Richtung auf die Kopfseite des Dichtrahmens hin erhöht werden.

In bevorzugter Weise geschieht die Einstellung eines definierten Biegemoments und insbesondere eines im Wesentlichen konstanten Flächenträgheitsmomentes in Radialrichtung des Dichtrahmens mittels wenigstens einer Versteifungseinrichtung, die eine in Radialrichtung verlaufende Versteifungsleiste umfasst und zweckmäßig auf einer von dem Rotor abgewandten Außenseite einer Dichtplatte des Dichtrahmens angeordnet ist. Der Dichtrahmen bezeichnet folglich die Gesamtheit aus Dichtplatte und Versteifungselement/en. Entsprechend umfasst die vorliegende Erfindung weiterhin einen regenerativen Wärmeübertrager mit einem als Rotor ausgebildeten Wärmespeicher, der um eine zentrale Drehachse drehbar gelagert ist, einem den Rotor umgebenden stationären Gehäuse und Dichtmitteln für den Rotor, umfassend wenigstens einen in Radialrichtung des Rotors verlaufenden und sich zu einer Außenseite des Rotors hin verbreiternden, eine Versteifungseinrichtung aufweisenden Dichtrahmen, der insbesondere zwischen einem Rauchgassektor und einem Luftsektor angeordnet ist, und mit einem Verstellsystem zum Einstellen eines Abstandes zwischen dem Dichtrahmen und dem Rotor, bei dem die Versteifungseinrichtung wenigstens eine sich in Radialrichtung erstreckende Versteifungsleiste aufweist, deren Höhe und/oder Breite in Radialrichtung nach außen hin abnimmt. Mit anderen Worten ist die Versteifungsleiste somit dem Biegeverhalten der insbesondere trapezförmigen Dichtplatte des Dichtrahmens entgegengesetzt ausgelegt und wird insbesondere in Radialrichtung zur Rotationsachse des Rotors gesehen nach außen hin schwächer.

Bevorzugt verläuft die wenigstens eine Versteifungsleiste dabei von der der Drehachse benachbarten Kopfseite des Dichtrahmens in Richtung auf die außen liegende Fußseite des Dichträhmens und besonders bevorzugt durchgängig über die gesamte radiale Länge des Dichtrahmens. Auf diese Weise ist die Verstärkung des Dichtrahmens im Bereich von dessen Kopfseite möglich, wobei grundsätzlich denkbar ist, dass die Versteifungsleiste bereits vor Erreichen des Außenrandes des Dichtrahmens endet. Besonders bevorzugt ist es allerdings, wenn die Versteifungsleiste über die gesamte radiale Länge des Dichtrahmens verläuft. Um ein über die gesamte radiale Erstreckung des Dichtrahmens gleichmäßiges Flächenträgheitsmoment zu erreichen, ist die wenigstens eine Versteifungsleiste zweckmäßig so ausgebildet, dass ihre Höhe und/oder Breite und insbesondere nur die Höhe mit zunehmender Entfernung von der Kopfseite abnimmt. Besonders effizient ist dabei die Änderung der Höhe der Versteifungsleiste, also ihre Ausdehnung in der Axialrichtung des Wärmeübertragers, da dieser Wert mit höherer Potenz in den Steinerschen Satz eingeht als die Breitenerstreckung.

Die Einstellung eines gleichmäßigen Flächenträgheitsmoments des Dichtrahmens kann mit lediglich einer Versteifungsleiste erfolgen oder auch mit mehreren Versteifungsleisten, die sich vollständig oder auch nur teilweise in radialer Richtung über den Dichtungsrahmen erstrecken, zweckmäßig erneut auf der dem Rotor abgewandten Oberfläche der Dichtplatte des Dichtrahmens. Bevorzugt erstrecken sich sämtliche Versteifungsleisten über die gesamte radiale Länge des Dichtrahmens und/oder weisen zueinander den gleichen Winkelabstand auf. Besonders bevorzugt sind insgesamt drei Versteifungsleisten vorhanden, von denen zwei entlang der Außenseiten des Dichtrahmens verlaufen und eine dritte im Wesentlichen mittig zwischen den beiden äußeren verläuft. "Im Wesentlichen mittig" bedeutet dabei eine Abweichung um bis zu 10 % der Gesamtbreite des Dichtrahmens von der exakten Mitte an der jeweiligen Position zwischen Kopfseite und Fußseite des Dichtrahmens. Besonders bevorzugt weisen alle Versteifungsleisten die beschriebene Änderung von Höhe und/oder Breite und insbesondere nur der Höhe in Richtung ihrer radialen Erstreckung auf. Es versteht sich dabei von selbst, dass die Änderung von Höhe und/oder Breite der einzelnen Versteifungsleisten so gewählt wird, dass sich insgesamt das in radialer Richtung im Wesentlichen konstante Flächenträgheitsmoment für den Dichtrahmen ergibt.

In einer bevorzugten Variante der Erfindung nehmen die Höhe und/oder Breite der wenigstens einen Versteifungsleiste in Radialrichtung von innen nach außen hin kontinuierlich ab. In dieser Weise kann eine besonders genaue, gleichbleibende Einstellung des Flächenträgheitsmoments in der radialen Erstreckungsrichtung des Dichtrahmens erfolgen. Grundsätzlich ebenfalls möglich ist es jedoch auch, wenn die Höhe der wenigstens eine Versteifungsleiste stufenförmig abnimmt. Insbesondere kann die wenigstens eine Versteifungsleiste aus mehreren Abschnitten unterschiedlicher konstanter Höhe bestehen. Aufgrund der stufenförmigen Änderung ist keine vollkommen exakte Einstellung eines konstanten Flächenträgheitsmoments des Dichtrahmens über dessen radiale Erstreckung mehr möglich. Auch dieses nicht vollkommen einheitliche Flächenträgheitsmoment in Radialrichtung ist jedoch für den Erfolg der Erfindung vollkommen ausreichend. Entsprechend sollen unter einem "im Wesentlichen konstanten Flächenträgheitsmoment" im Sinne dieser Erfindung auch Abweichungen von bis zu 25 %, insbesondere bis zu 15 %, bevorzugt um nicht mehr als 10 % und insbesondere um nicht mehr als 5 % vom höchsten Wert des Flächenträgheitsmoments in Radialrichtung des Dichtrahmens verstanden werden.

Als Dichtrahmen werden, wie bereits erwähnt, erfindungsgemäß solche eingesetzt, deren Breite an ihrer Kopfseite geringer ist als an ihrer Fußseite. Bevorzugt werden solche Dichtrahmen verwendet, die bei Draufsicht in Achsrichtung trapezförmig oder in etwa trapezförmig ausgebildet sind. Derartige Formen von Dichtrahmen sind bereits grundsätzlich bekannt. In einer besonders bevorzugten Ausbildungsform sind sie so ausgebildet, dass sie in jedem Ring des Rotors dieselbe Anzahl von Zellen überdecken, wenn der Rotor in ebenfalls an sich bekannter Weise eine Anzahl von Radialwänden und Zwischenspeicherelementen aufweist, die eine Struktur von aus in Zellen unterteilten konzentrischen Ringen bilden. Teil eines solchen Dichtrahmens ist ferner eine Dichtplatte, bei der es sich um ein flaches, sich in Radialrichtung erstreckendes Plattenelement, einstückig oder mehrstückig, handelt, welches letztlich für den Dichteffekt des Dichtrahmens ursächlich ist.

Abgesehen von der erfindungsgemäßen Versteifungseinrichtung und/oder der entsprechenden Abstimmung des Flächenträgheitsmomentes kann der erfindungsgemäß verwendete Dichtrahmen von seinem Grundaufbau wie im Stand der Technik ausgebildet sein. So ist es beispielsweise möglich, zusätzlich zu den in Radialrichtung verlaufenden Versteifungsleisten quer zu diesen verlaufende weitere Versteifungsrippen vorzusehen. Auch die Befestigung des Dichtrahmens kann grundsätzlich wie im Stand der Technik erfolgen. Üblich ist dabei die Befestigung der Kopfseite des Dichtrahmens an der sogenannten Kernabdichtung des Rotorgehäuses. Die Befestigung erfolgt beispielsweise an einem sogenannten Kernstellpunkt mittels einer eigenen Verstelleinrichtung, mit welcher die Kopfseite des Dichtrahmens in der gewünschten Höhe zur Kernabdichtung zunächst eingestellt, dann aber höhenunveränderlich fixiert wird. Eine Höhenverstellung während des Betriebs findet an diesem Kernstellpunkt nicht mehr statt, weshalb die Kernverstelleinrichtung nicht zum Verstellsystem der erfindungsgemäßen Vorrichtung gezählt wird, da zur Biegung der Dichtplatte keine Verstellung am Kernstellpunkt erfolgt.

Das Verstellsystem der erfindungsgemäßen Vorrichtung umfasst in einer Alternative wenigstens zwei mit dem Dichtrahmen verbundene Verstelleinrichtungen zum Biegen des Dichtrahmens in Axialrichtung, wobei sich eine der wenigstens zwei Verstelleinrichtung insbesondere an der Fußseite des Dichtrahmens befindet bzw. dort an diesem angreift und die andere Verstelleinrichtung in Radialrichtung gesehen in etwa mittig zwischen Kopfseite und Fußseite des Dichtrahmens angeordnet ist bzw. an diesem angreift. Es ist ferner vorgesehen, dass die wenigstens zwei Verstelleinrichtung in einander entgegengesetzte Richtungen, beispielsweise in Vertikalrichtung nach oben und nach unten, verstellbar sind bzw. zueinander entgegengesetzt auf den Dichtrahmen wirken, konkret auf Zug und auf Druck. Damit kann bereits mit sehr wenigen Verstelleinrichtungen eine gezielte Verbiegung des Dichtrahmens und insbesondere der Dichtplatte des Dichtrahmens in Radialrichtung gesehen erreicht werden und ein Durchhängen des Dichtrahmens zwischen den Verstelleinrichtungen wird dennoch zuverlässig vermieden. Gezielt ist dabei so zu verstehen, dass die Verbiegung des Dichtrahmens möglichst nah an die Verformung des Rotors in Radialrichtung angepasst ist. Mit dieser Verstelleinrichtung kann der Abstand des Dichtrahmens zum Rotor während des Betriebes nachgestellt werden, um den Dichtspalt zwischen Rotor und Dichtrahmen gleichmäßig gering zu halten. Wie bereits erwähnt, erlaubt die erfindungsgemäße Einstellung eines gleichmäßigen Flächenträgheitsmoments über die radiale Erstreckung des Dichtrahmens die Verwendung nur sehr weniger Verstelleinrichtungen, wobei prinzipiell mit bereits wenigstens zwei Verstelleinrichtungen eine optimale Einstellung des Dichtspalts erreicht werden kann, da sich der Dichtrahmen beim Betrieb sehr ähnlich wie der Rotor verformen lässt. In jedem Fall sind üblicherweise nicht mehr als zwei Verstelleinrichtungen pro Dichtrahmen erforderlich, um für eine gute Dichtigkeit zwischen Dichtrahmen und Rotor zu sorgen. In einer bevorzugten Ausführungsform besitzt das Verstellsystem des erfindungsgemäßen regenerativen Wärmeübertragers daher genau zwei Verstelleinrichtungen pro Dichtrahmen, wobei die erste Verstelleinrichtung sich in Radialrichtung gesehen im Bereich der Fußseite des Dichtrahmens befindet und die weitere Verstelleinrichtung in etwa mittig zwischen Kopfseite und Fußseite angeordnet ist. Unabhängig davon ist in der Regel auch die vorstehend bereits erwähnte Verstelleinrichtung am Kernstellpunkt vorhanden, die allerdings nicht Teil des Verstellsystems ist, mit dem die Biegung des Dichtrahmens während des Betriebs des regenerativen Wärmeübertragers erfolgt. Ferner können die Verstelleinrichtungen einander entgegengesetzt verstellt werden, so dass beispielsweise bei einem an den Verstelleinrichtungen hängenden Dichtrahmen insbesondere die mittige Verstelleinrichtung einen in Vertikalrichtung nach oben gerichteten Zug auf den Dichtrahmen und die an der in Radialrichtung gesehen außenliegenden Fußseite am Dichtrahmen angreifende Verstelleinrichtung einen in Vertikalrichtung nach unten gerichteten Druck auf den Dichtrahmen ausüben kann. Hierdurch kann eine gezielte und gleichmäßige in Radialrichtung verlaufende Verbiegung des Dichtrahmens und insbesondere der Dichtplatte erreicht werden, was erst durch die in radialer Richtung im Wesentlichen konstante Ausbildung des Flächenträgheitsmomentes möglich ist.

Unter einer Verstelleinrichtung wird erfindungsgemäß eine Vorrichtung zum Einstellen des Dichtspalts zwischen Dichtrahmen und Rotoroberfläche verstanden, die in einem bestimmten radialen Abstand von der Kopfseite des Dichtrahmens angeordnet ist. Eine Verstelleinheit kann auf mehrere Verstellpunkte auf dem Dichtrahmen einwirken, beispielsweise auf Verstellpunkte, die sich benachbart zu den Außenkanten des Dichtrahmens in etwa gleichem radialen Abstand von der Kopfseite des Dichtrahmens befinden. Derartige Verstelleinrichtungen sind aus dem Stand der Technik an sich grundsätzlich bereits bekannt und können unverändert in dem erfindungsgemäßen Wärmeübertrager eingesetzt werden. Beispielhaft können pneumatische, elektromechanische oder manuelle Verstellvorrichtungen erwähnt werden. Wesentlich ist, dass die Verstelleinrichtung eine Druck- und/oder Zugbelastung auf den Dichtrahmen bewirken und in zumindest einem begrenzten Umfang linear, insbesondere in Richtung der Rotationsachse des Rotors, verstellbar sind. Zur Messung des Abstandes zwischen Dichtrahmen und Rotoroberfläche können die ebenfalls aus dem Stand der Technik bekannten Sensoren verwendet werden. Geeignet sind beispielsweise induktive, kapazitive, optische, berührende oder kraftmessende Sensoren.

Die Erfindung umfasst solche Wärmeübertrager, bei denen lediglich ein einziger Dichtrahmen auf einer Seite des Rotors angeordnet ist. Üblicherweise werden jedoch mehrere Dichtrahmen, beispielsweise zwei oder drei Dichtrahmen, auf einer Seite des Rotors vorhanden sein. In der Regel sind Dichtrahmen zudem nicht nur auf einer Seite des Rotors, sondern beidseitig des Rotors angeordnet. Zweckmäßig sind sämtliche Dichtrahmen entsprechend der beschriebenen Erfindung ausgebildet. Die Verstelleinrichtungen werden dabei so betrieben, dass diejenige auf der Oberseite des Rotors, die sich im Fußbereich des Dichtrahmens befindet, entsprechend der Rotorvvölbung einen Druck auf den Dichtrahmen ausübt, während die im Fußbereich auf der Unterseite angeordnete Verstelleinrichtung entsprechend einen Zug auf den Dichtrahmen ausübt. Sind im Mittelbereich zwischen Kopf- und Fußseite des Dichtrahmens weitere Verstelleinrichtungen vorhanden, ist die auf der Oberseite des Rotors befindliche so ausgebildet, dass sie einen Zug auf den Dichtrahmen ausübt, während die auf der Unterseite befindliche einen Druck auf den Dichtrahmen ausübt. Durch das Zusammenwirken der verschiedenen Verstelleinrichtungen und der erfindungsgemäß ausgebildeten Dichtrahmen ist eine besonders exakte Anpassung des Dichtspalt an die Rotoroberfläche und damit eine gute Dichtung zwischen Dichtrahmen und Rotor möglich, ohne dass sich der konstruktive Aufwand deshalb gegenüber dem Stand der Technik erheblich verstärken würde. Im Gegenteil wird lediglich eine geringe Anzahl an Verstelleinrichtungen benötigt.

Die Erfindung soll nachfolgend anhand von Zeichnungen näher erläutert werden. Die Figuren dienen lediglich der Beschreibung bevorzugter Ausführungsformen der Erfindung, ohne dass die Erfindung auf diese Ausführungsformen beschränkt wäre. Es soll ausdrücklich darauf hingewiesen werden, dass die Merkmale der im Zusammenhang mit den Figuren erläuterten Ausführungsbeispiele miteinander kombiniert werden können, sofern sich hieraus kein technischer Widerspruch ergibt. Die Figuren sind rein schematisch und nicht maßstabsgerecht. Gleiche Bauteile sind in den Figuren mit gleichen Bezugszeichen bezeichnet, wobei nicht jedes sich in den Figuren wiederholende Bauteil durchgehend separat bezeichnet sein muss. Im Einzelnen zeigen:
- Fig. 1:: den Dichtspalt zwischen der Oberfläche eines Rotors und einem Dichtrahmen im Stand der Technik;
- Fig. 2:: ein weiteres Beispiel eines Dichtspalts zwischen der Oberfläche eines Rotors und eines Dichtrahmens im Stand der Technik;
- Fig. 3:: einen erfindungsgemäßen regenerativen Wärmeübertrager in Draufsicht in Achsrichtung;
- Fig. 4:: einen Dichtrahmen eines erfindungsgemäßen regenerativen Wärmeübertragers in einer perspektivischen Ansicht;
- Fig. 5:: ein Dichtmittel mit mehreren Dichtrahmen für einen erfindungsgemäßen regenerativen Wärmeübertrager in einer perspektivischen Ansicht;
- Fig. 6a bis 6c:: mehrere Varianten von radial verlaufenden Versteifungsleisten in Seitenansicht;
- Fig. 7a und 7b:: mehrere Varianten von radial verlaufenden Versteifungsleisten in Draufsicht sowie
- Fig. 8:: einen Ausschnitt eines erfindungsgemäßen Wärmeübertragers in Seitenansicht.

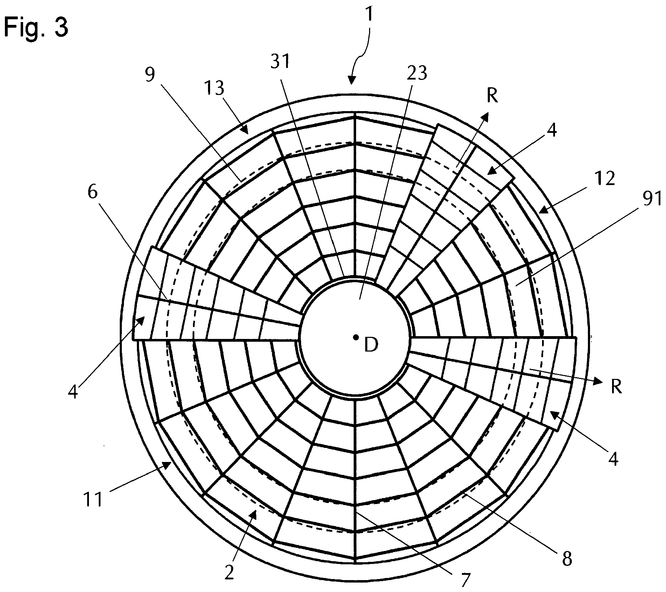

Die Figur 3 zeigt einen erfindungsgemäßen Wärmeübertrager 1 in Draufsicht in Achsrichtung D. Der als Rotor 2 ausgebildete Wärmespeicher ist von einem stationären Gehäuse 3 umgeben, um die Drehachse D drehbar gelagert und grundsätzlich wie im Stand der Technik ausgebildet. Wärmespeicherelemente 8 sind in konzentrischen Ringen 9 um den Rotorkern 23 herum angeordnet. Diese Ringe 9 werden durch sich vom Rotorkern nach außen erstreckende Radialwände 7 parzelliert. Mehrere Gasvolumenströme unterschiedlicher Temperatur durchströmen den Wärmeübertrager 1 im Wesentlichen parallel zur Drehachse D, jedoch in entgegengesetzter Richtung. Beispielsweise kann es sich bei diesen Gasvolumenströmen um einen heißeren Rauchgasstrom und einen oder mehrere kältere Verbrennungsluftströme handeln. Der Wärmeübertrager 1 weist entsprechend einen Rauchgassektor 11 und im gezeigten Beispiel zwei Luftsektoren 12, 13 auf. Ein direkter Gasaustausch zwischen den einzelnen Zellen 91, und somit auch zwischen Rauchgassektor 11 und Luftsektoren 12, 13 wird durch die Radialwände 7 verhindert. Im laufenden Betrieb dreht sich der Rotor 2, wobei die Wärmespeicherelemente 8 von dem ursprünglich heißeren Rauchgasstrom im Rauchgassektor 11 jeweils Wärmeenergie aufnehmen und diese dann an die ursprünglich kälteren Luftströme in den Luftsektoren 12, 13 abgeben. Auf diese Weise kann Wärmeenergie zwischen den Gasströmen übertragen werden.

Um einen Energieverlust durch einen unerwünschten Gasaustausch zwischen einzelnen Sektoren 11, 12, 13 zu vermeiden, umfasst auch das Gehäuse 3 Dichtmittel für den Rotor 2, zu denen unter anderem auch mehrere Dichtrahmen 4 gehören, die gegen die Ober- und Unterseite des Rotors 2 jeweils in Radialrichtung abdichten und oberhalb der Sektorengrenzen verlaufen. Darüber hinaus umfassen die Dichtmittel auch eine Kernabdichtung 31 zum Rotorkern 23 hin sowie Axialdichtungen an den Außenrändern des Rotors 2, die hier jedoch nicht dargestellt sind.

Die Dichtrahmen 4 besitzen jeweils eine annähernd trapezartige Form und verbreitern sich vom Zentrum des Wärmetauschers 1 hin zum Rand, mit anderen Worten nimmt der Querschnitt eines Dichtrahmens 4 also mit steigender Entfernung von der Drehachse D zu. Die Dichtrahmen 4 weisen jeweils eine Dichtplatte 4' auf, die sich in Radialrichtung erstreckt und in der Fläche im Wesentlichen geschlossen und in der Art eines Kreissektors ausgebildet ist. Ein mit der Dichtplatte 4' verbundenes Versteifungssystem 6 sorgt zudem dafür, dass der Dichtrahmen 4 an sich ein definiertes Flächenträgheitsmoment aufweist, das dem Dichtungsrahmen ein Biegemoment in Radialrichtung verleiht, das dem Biegeverhalten des Rotors bei Betriebstemperatur und -druck angenähert ist. Aufgrund dessen wird nur noch eine geringe Anzahl an Verstelleinrichtungen benötigt, um während des Betriebs für einen gleichmäßigen und geringen Dichtspalt zwischen Rotor und Dichtrahmen und insbesondere der Dichtplatte 4' zu sorgen. Ein "Durchhängen" des Dichtrahmens zwischen den einzelnen Verstellpunkten wird durch die Versteifungseinrichtung 6 und insbesondere auch durch den Umstand vermieden, dass das Flächenträgheitsmoment des Dichtrahmens 4 in Radialrichtung im Wesentlichen konstant ist. Auch wenn hier lediglich die Oberseite (Heißseite) des Rotors gezeigt ist, sind Dichtrahmen in entsprechender Weise auf der Unterseite (Kaltseite) des Rotors angeordnet.

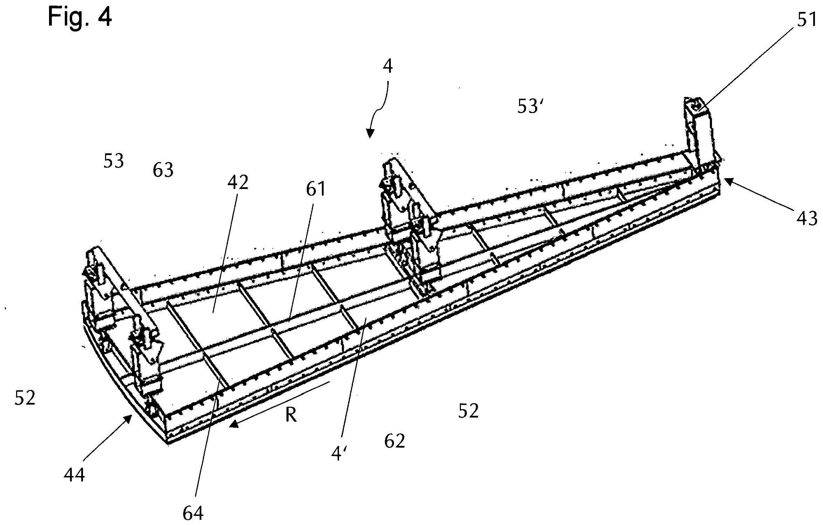

Der Aufbau eines Dichtrahmens 4 im Detail ist in der Figur 4 dargestellt. Auf der Oberseite 42 einer sich in der Fläche quer zur Rotationsachse erstreckenden Dichtplatte 4' des Dichtrahmens 4 auf der vom Rotor abgewandten Seite, ist eine Versteifungseinrichtung 6 mit Versteifungsleisten 61, 62, 63 angeordnet. Die Versteifungsleisten 61, 62, 63 erstrecken sich von der Kopfseite 43 durchgängig bis zur Fußseite 44 des Dichtrahmens 4. Die Dichtleisten 62 und 63 verlaufen unmittelbar entlang der Außenseiten des Dichtrahmens 4, die Versteifungsleiste 61 in der Mitte zwischen beiden. Weiterhin sind mehrere quer zu den Versteifungsleisten verlaufende Querrippen 64 vorhanden. Die Einstellung des Flächenträgheitsmoments über die gesamte radiale Erstreckung des Dichtrahmens 4 erfolgt über die Versteifungsleisten 61 bis 63, worauf nachfolgend noch näher eingegangen werden wird.

Zur Anpassung des Dichtrahmens 4 an den Rotor und zur möglichst gleichmäßigen Einstellung des Dichtspalts zwischen Rotor und Dichtrahmen ist ein Verstellsystem 5 vorhanden, das hier aus zwei Verstelleinrichtungen 53, 53' besteht. Eine weitere Verstelleinheit 51 befindet sich an der Kopfseite 43 des Dichtrahmens. Diese Verstelleinheit 51 ist jedoch nicht Bestandteil des Verstellsystems 5, sondern dient nur der Einstellung und Befestigung der Kopfseite 43 des Dichtrahmens an der Kernabdichtung 31 und wird während des Betriebs nicht mehr verstellt. Die beiden Verstelleinrichtungen 53, 53' sind in unterschiedlichen radialen Abständen von der Kopfseite 43 des Dichtrahmens 4 angeordnet. Die erste Verstelleinrichtung 53 befindet sich unmittelbar an der Fußseite 44 des Dichtrahmens 4, die zweite Verstelleinrichtung 53' in der Mitte zwischen erster Verstelleinrichtung 53 und Kopfseite 43 des Dichtrahmens. Jede der Verstelleinrichtungen 53, 53' wirkt auf zwei Verstellpunkte 52, die sich in geringem Abstand benachbart zu den Außenkanten des Dichtrahmens 4 befinden. Auf diese Weise ist ein verwindungsfreies Auf- und Abbewegen und Biegen des Dichtrahmens 4 möglich. Das Verbiegen des Dichtrahmens mittels der Verstelleinrichtungen 53, 53' zur Regulierung des Dichtspaltes erfolgt mittels einer Steuerungsvorrichtung, die Abstandswerte zwischen Dichtrahmen und Rotoroberfläche übermittelt bekommt, welche von Sensoren geliefert werden, die in der Nähe der jeweiligen Verstelleinrichtungen positioniert sind. Die Regelung an sich ist im Stand der Technik bekannt. Die Sensoren sind hier daher auch nicht dargestellt. Auf diese Weise kann der Dichtrahmen 4 im laufenden Betrieb stets so gebogen werden, dass auch bei unterschiedlichen Lastzuständen, und somit auch unterschiedlicher Wölbung des Rotors 2, immer ein im Wesentlichen konstant breiter Dichtspalt 10 zwischen Dichtrahmen 4 und Rotor 2 gegeben ist. Aufgrund der im Wesentlichen konstanten Ausbildung des Flächenträgheitsmoments tritt ferner ein lokales Durchhängen des Dichtrahmens 4 trotz der nur sehr wenigen Lagerpunkte des Dichtrahmens praktisch nicht auf.

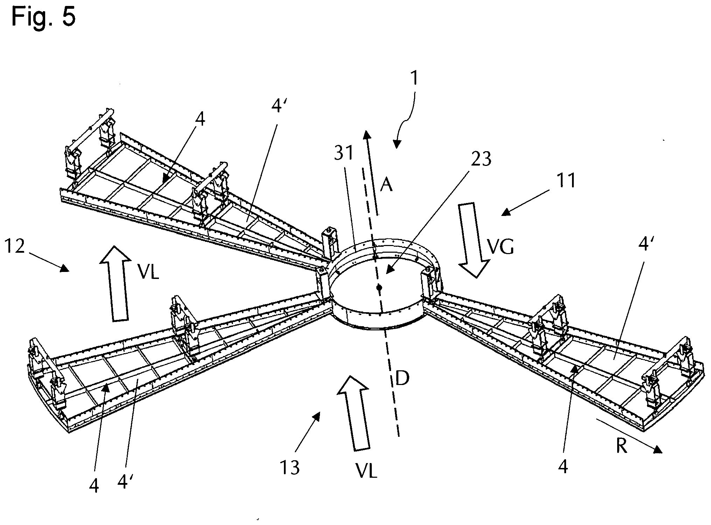

Die Figur 5 zeigt die Gesamtkonstruktion der Dichtmittel für die Oberseite des Rotors 2 mit drei Dichtrahmen 4. Im Zentrum verläuft die Drehachse D des Rotors 2, wobei die Kerndichtung 31 den Rotorkern 23 abdichtet. Mittels der drei Dichtrahmen 4, die mit der Kerndichtung 31 verbunden sind, können somit drei jeweils gegeneinander abgedichtete Sektoren 11, 12, 13 des Wärmetauschers gebildet werden, beispielsweise um bei dem Einsatz in einem Kraftwerk einen Abgasstrom VG in einem Rauchgassektor 11 und Luftströme VL in zwei Luftsektoren 12, 13 voneinander zu trennen.

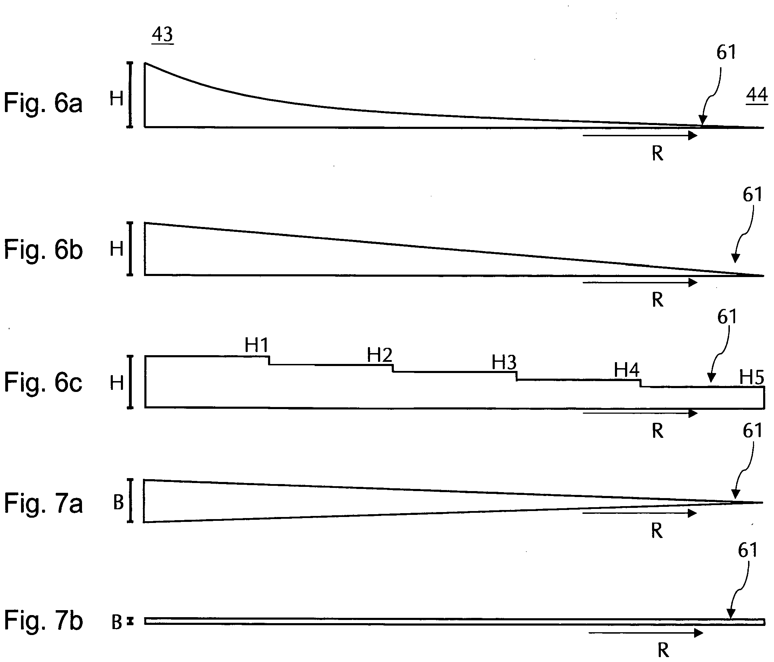

Die folgenden Figuren befassen sich mit der Konstruktion der radial verlaufenden Versteifungsleisten 61, 62, 63 im Detail. Die Figuren 6a bis 6c zeigen hierbei Varianten für unterschiedliche Höhenprofile der Versteifungsleisten, hier am Beispiel der mittleren Versteifungsleiste 61. Die Höhenrichtung entspricht der Achsrichtung des Wärmeübertragers. Die linke Seite des Höhenprofils entspricht der Kopfseite 43 des Dichtrahmens 4. Die Höhe der Versteifungsleiste 61 nimmt also von der Kopfseite in Richtung auf die Fußseite 44 des Dichtrahmens hin ab. In der Figur 6a ist ein im Wesentlichen in radialer Richtung R kontinuierlich, insbesondere polynomiell abnehmendes Höhenprofil dargestellt. Dieses Höhenprofil entspricht am ehesten rein rechnerisch demjenigen Profil, bei dem eine mittlere Versteifungsleiste 61 das Flächenträgheitsmoment eines ansonsten planaren, trapezförmigen Dichtrahmens 4 so ausgleicht, dass es in radialer Richtung einen konstanten Verlauf aufweist. Die Figur 6b zeigt hingegen eine Versteifungsleiste 61 mit einem Höhenprofil, welches einer linear abfallenden Näherung für das besagte rechnerische Profil entspricht. In der Figur 6c ist weiterhin eine Variante mit abschnittsweise abfallenden Höhen der Versteifungsleiste 61 in Radialrichtung R gezeigt. Diese zuletzt gezeigte Variante hat den Vorteil, dass sie konstruktionstechnisch besonders einfach und kostengünstig umsetzbar ist. Allen in Figur 6 gezeigten Profilen ist gemeinsam, dass die Verwendung einer Versteifungsleiste mit einem derartigen Höhenprofil in einem Dichtrahmen dazu führt, dass dieser ein gemäß der im Rahmen der Erfindung gültigen Definition im Wesentlichen konstantes Flächenträgheitsmoment in seiner radialen Erstreckungsrichtung aufweist. Werden, wie in Figur 4 gezeigt, mehrere Versteifungsleisten innerhalb eines Dichtrahmens verwendet, wirken die Höhenprofile aller dieser Versteifungsleisten derart zusammen, dass sich ein in Radialrichtung im Wesentlichen konstantes Flächenträgheitsmoment ergibt.

Alternativ oder ergänzend zur Variation der Höhe ist auch eine anderweitige Variierung des Querschnitts einer Versteifungsleiste in radialer Richtung möglich, um einen konstantes Flächenträgheitsmoment im radialen Verlauf zu erreichen. Auch wenn eine Veränderung der Höhe effektiver ist als eine Veränderung der Breite, ist auch diese Variante denkbar und in der Figur 7a dargestellt. Hierbei ist gemäß der Figur 7a ein linear abnehmendes Breitenprofil vorgesehen, dies ist jedoch lediglich beispielhaft zu verstehen. Die Breite B beschreibt dabei die Ausdehnung einer Versteifungsleiste in einer Richtung senkrecht zur Achsrichtung D und Radialrichtung R. Eine erwünschte Wirkung kann ebenso mit einem anderweitig abnehmenden Breitenprofil erreicht werden, beispielsweise mit einem exponentiell, polynomiell oder abschnittsweise linear abnehmenden Breitenprofil. Die Figur 7b zeigt hingegen einen linear konstantes Breitenprofil, welches sich insbesondere in Verbindung mit den in den Figuren 6a bis 6c dargestellten Höhenprofilen für die Versteifungsleiste 61 eignet. Allerdings kann selbstverständlich auch ein linear abnehmendes Breitenprofil, wie beispielsweise in Figur 7a dargestellt, mit einem der Höhenprofile aus den Figuren 6a bis 6c kombiniert werden, um den gewünschten Effekt zu erreichen, wonach das Flächenträgheitsmoment des Dichtrahmens 4 in radialer Richtung im Wesentlichen konstant ist.

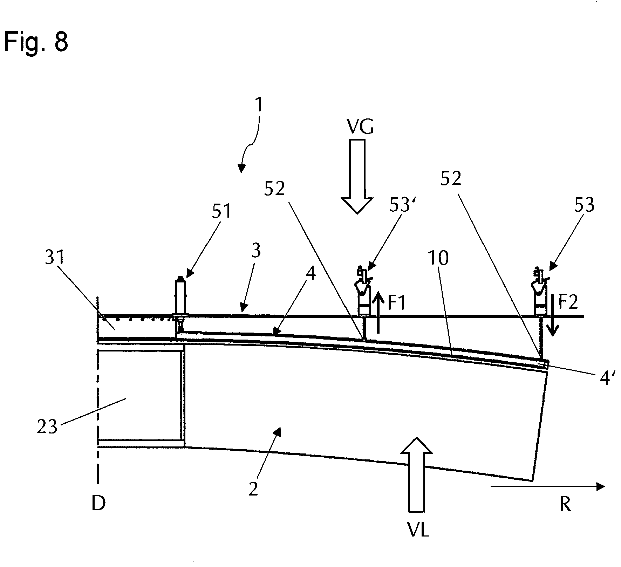

Figur 8 zeigt schließlich noch einmal einen Teil-Querschnitt des Rotors 2 und des Dichtrahmens 4 für eine Seite des regenerativen Wärmeübertragers 1, wobei sich der dargestellte Ausschnitt auf eine Seite des Rotors 2 beschränkt und die Querschnittsebene in Radialrichtung verläuft. Die Figur zeigt den Wärmeübertrager 1 im laufenden Betrieb, mit anderen Worten also in einem Lastzustand, was sich insbesondere daran erkennen lässt, dass unter der Belastung der hohen Temperaturen der Rotor 2 verformt ist. Nachdem die Oberseite des Rotors 2 sich aufgrund der höheren Temperaturen an diesem Ende stärker ausdehnt als die Unterseite, ist der Rotor 2 nach unten hin verbogen. Die Oberseite des Rotors 2 ist konvex gewölbt, während die Unterseite des Rotors 2 eine konkave Wölbung aufweist. Dichtrahmen sind sowohl auf Ober- als auch Unterseite des Rotors vorhanden, hier jedoch ist nur der Dichtrahmen der Oberseite eingezeichnet. Der Dichtrahmen 4 wird mithilfe der Verstelleinrichtungen 53, 53' an den Stellpunkten 52 so verbogen, dass der Dichtspalt 10 über die gesamte radiale Ausdehnung des Rotors 2 optimiert wird und gleichmäßig klein ist. Hierzu übt die mittlere Stelleinrichtung 53' eine Zugkraft F1 auf den Dichtrahmen 4 aus, während die äußere Verstelleinrichtung 53 eine Schubkraft F2 aufbringt. Die beiden Verstelleinrichtungen 53, 53' wirken also in entgegengesetzter Richtung, wodurch der Dichtrahmen 4 in gewünschter Weise gebogen wird. Im Falle des Dichtrahmens auf der Unterseite des Rotors wäre es umgekehrt, hier würde die mittlere Verstelleinrichtung eine Schubkraft aufbringen, die äußere Verstelleinrichtung dagegen eine Zugkraft.

## Patentansprüche

1. Regenerativer Wärmeübertrager (1) mit einem als Rotor (2) ausgebildeten Wärmespeicher, der um eine zentrale Drehachse (A) drehbar gelagert ist, einem den Rotor (2) umgebenden stationären Gehäuse (3) und Dichtmitteln für den Rotor (2), umfassend wenigstens einen in Radialrichtung des Rotors (2) verlaufenden und sich zu einer Außenseite des Rotors (2) hin verbreiternden, eine Versteifungseinrichtung (6) aufweisenden Dichtrahmen (4), der insbesondere zwischen einem Rauchgassektor (11) und einem Luftsektor (12, 13) angeordnet ist, und mit einem Verstellsystem (5) zum Einstellen eines Abstandes zwischen dem Dichtrahmen (4) und dem Rotor (2), dass das Verstellsystem (5) wenigstens zwei mit dem Dichtrahmen (4) verbundene Verstelleinrichtungen (53, 53') zum Biegen des Dichtrahmens (4) in Axialrichtung umfasst,
**dadurch gekennzeichnet,**
**dass** die Versteifungseinrichtung (6) so ausgebildet ist, dass das Flächenträgheitsmoment des Dichtrahmens (4) in dessen radialer Richtung (R) im Wesentlichen konstant ist, und dass die wenigstens zwei Verstelleinrichtungen (53, 53) zum Biegen des Dichtrahmens (4) in Axialrichtung in einander entgegengesetzte Richtungen verstellbar sind und/oder in einander entgegengesetzte Richtungen auf den Dichtrahmen (4) wirken.

2. Regenerativer Wärmeübertrager (1) nach Anspruch 1,
**dadurch gekennzeichnet,**
**dass** die Versteifungseinrichtung (6) wenigstens eine an der von dem Rotor (2) abgewandten Außenseite (42) des Dichtrahmens (4) angeordnete, in Radialrichtung (R) verlaufende Versteifungsleiste (61) umfasst.

3. Regenerativer Wärmeübertrager (1) mit einem als Rotor (2) ausgebildeten Wärmespeicher, der um eine zentrale Drehachse (A) drehbar gelagert ist, einem den Rotor (2) umgebenden stationären Gehäuse (3) und Dichtmitteln für den Rotor (2), umfassend wenigstens einen in Radialrichtung des Rotors (2) verlaufenden und sich zu einer Außenseite des Rotors (2) hin verbreiternden, eine Versteifungseinrichtung (6) aufweisenden Dichtrahmen (4), der insbesondere zwischen einem Rauchgassektor (11) und einem Luftsektor (12, 13) angeordnet ist, und mit einem Verstellsystem (5) zum Einstellen eines Abstandes zwischen dem Dichtrahmen (4) und dem Rotor (2),
**dadurch gekennzeichnet,**
**dass** die Versteifungseinrichtung (6) wenigstens eine sich in Radialrichtung erstreckende Versteifungsleiste (61) aufweist, deren Höhe (H) und/oder Breite (B) in Radialrichtung (R) nach außen hin abnimmt.

4. Regenerativer Wärmeübertrager (1) nach Anspruch 2 oder 3,
**dadurch gekennzeichnet,**
**dass** die wenigstens eine Versteifungsleiste (61) von einer der Drehachse (A) benachbarten Kopfseite (43) des Dichtrahmens (4) in Richtung auf eine außen liegende Fußseite (44) des Dichtrahmens (4) und bevorzugt durchgängig über die gesamte radiale Länge des Dichtrahmens (4) verläuft.

5. Regenerativer Wärmeübertrager (1) nach einem der Ansprüche 2 bis 4,
**dadurch gekennzeichnet,**
**dass** drei Versteifungsleisten (61, 62, 63) vorhanden sind, von denen zwei (62, 63) entlang der Außenseiten des Dichtrahmens (4) verlaufen und eine dritte (61) im Wesentlichen mittig zwischen den beiden äußeren verläuft.

6. Regenerativer Wärmeübertrager (1) nach einem der Ansprüche 2 bis 5,
**dadurch gekennzeichnet,**
**dass** die Höhe (H) und/oder Breite (B) und insbesondere nur die Höhe (H) der wenigstens einen Versteifungsleiste (61) mit zunehmender Entfernung von der Kopfseite (43) abnimmt.

7. Regenerativer Wärmeübertrager (1) nach Anspruch 6,
**dadurch gekennzeichnet,**
**dass** die Höhe (H) und/oder Breite (B) der wenigstens einen Versteifungsleiste (61) kontinuierlich abnimmt.

8. Regenerativer Wärmeübertrager (1) nach Anspruch 6,
**dadurch gekennzeichnet,**
**dass** die Höhe (H) der wenigstens eine Versteifungsleiste (61) stufenförmig abnimmt und die wenigstens eine Versteifungsleiste (61) aus mehreren Abschnitten unterschiedlicher konstanter Höhe (H1 bis H5) besteht.

9. Regenerativer Wärmeübertrager (1) nach einem der Ansprüche 1 bis 8,
**dadurch gekennzeichnet,**
**dass** der Dichtrahmen (4) im Wesentlichen trapezförmig ausgebildet ist, bevorzugt derart, dass er in jedem Ring (9) des Rotors (2) dieselbe Anzahl von Zellen (91) überdeckt, wenn der Rotor (2) eine Anzahl von Radialwänden (7) und Zwischenspeicherelementen (8) aufweist, die eine Struktur von aus in Zellen (91) unterteilten konzentrischen Ringen (9) bilden.

10. Regenerativer Wärmeübertrager (1) nach einem der vorhergehenden Ansprüche,
**dadurch gekennzeichnet,**
**dass** das Verstellsystem (5) genau zwei Verstelleinrichtungen (53, 53'), aufweist, wobei die eine Verstelleinrichtung (53) an der Fußseite (44) und die andere Verstelleinrichtung (53') in etwa mittig zwischen Kopfseite (43) und Fußseite (44) des Dichtrahmens (4) an diesem angreift.

11. Regenerativer Wärmeübertrager (1) nach einem der Ansprüche 3 bis 10,
**dadurch gekennzeichnet,**
**dass** sich Höhe (H) und/oder Breite (B) der Versteifungseinrichtung (6) derart ändern, dass das Flächenträgheitsmoment des Dichtrahmens (4) in dessen radialer Richtung (R) im Wesentlichen konstant ist.

## Claims

1. A regenerative heat exchanger (1) with a heat accumulator configured as a rotor (2), which is rotatably mounted about a central axis of rotation (A), a stationary housing (3) surrounding the rotor (2) and sealing means for the rotor (2), comprising at least one sealing frame (4) extending in the radial direction of the rotor (2) and widening toward an outer side of the rotor (2) and comprising a reinforcement device (6), the sealing frame (4) being arranged in particular between a flue gas sector (11) and an air sector (12, 13), and with an adjustment system (5) for adjusting a distance between the sealing frame (4) and the rotor (2), the adjustment system (5) comprising at least two adjustment devices (53, 53') connected with the sealing frame (4) for bending the sealing frame (4) in the axial direction,
**characterized in that**
the reinforcement device (6) is configured in such a way that the geometrical moment of inertia of the sealing frame (4) is essentially constant in its radial direction (R), and that the at least two adjustment devices (53, 53') for bending the sealing frame (4) in the axial direction are adjustable in opposite directions relative to one another and/or act on the sealing frame (4) in opposite directions relative to one another.

2. The regenerative heat exchanger (1) according to claim 1,
**characterized in that**
the reinforcement device (6) comprises at least one reinforcement strip (61) extending in the radial direction (R) and arranged at the outer side (42) of the sealing frame (4) facing away from the rotor (2).

3. A regenerative heat exchanger (1) with a heat accumulator configured as a rotor (2), which is rotatably mounted about a central axis of rotation (A), a stationary housing (3) surrounding the rotor (2) and sealing means for the rotor (2), comprising at least one sealing frame (4) extending in the radial direction of the rotor (2) and widening toward an outer side of the rotor (2) and comprising a reinforcement device (6), the sealing frame (4) being arranged in particular between a flue gas sector (11) and an air sector (12, 13), and with an adjustment system (5) for adjusting a distance between the sealing frame (4) and the rotor (2),
**characterized in that**
the reinforcement device (6) comprises at least one reinforcement strip (61) extending in the radial direction and having a height (h) and/or width (B) which decreases outwardly in the radial direction (R).

4. The regenerative heat exchanger (1) according to claim 2 or 3,
**characterized in that**
the at least one reinforcement strip (61) extends from a head end (43) of the sealing frame (4) adjacent to the axis of rotation (A) toward an outer foot end (44) of the sealing frame (4) and preferably extends continuously across the entire radial length of the sealing frame (4).

5. The regenerative heat exchanger (1) according to any one of claims 2 to 4,
**characterized in that**
three reinforcement strips (61, 62, 63) are present, of which two (62, 63) extend along the outer sides of the sealing frame (4) and a third (61) extends essentially down the middle between the two outer reinforcement strips.

6. The regenerative heat exchanger (1) according to any one of claims 2 to 5,
**characterized in that**
the height (H) and/or width (B), in particular only the height (H), of the at least one reinforcement strip (61) decreases as the distance from the head end (43) increases.

7. The regenerative heat exchanger (1) according to claim 6,
**characterized in that**
the height (H) and/or width (B) of the at least one reinforcement strip (61) continuously decreases.

8. The regenerative heat exchanger (1) according to claim 6,
**characterized in that**
the height (H) of the at least one reinforcement strip (61) decreases in steps and the at least one reinforcement strip (61) consists of multiple sections of different constant heights (H1 to H5).

9. The regenerative heat exchanger (1) according to any one of claims 1 to 8,
**characterized in that**
the sealing frame (4) is configured to be essentially trapezoidal, preferably such that it covers the same number of cells (91) in each ring (9) of the rotor (2) when the rotor (2) has a number of radial walls (7) and intermediate storage elements (8) that form a structure of concentric rings (9) subdivided into cells (91).

10. The regenerative heat exchanger (1) according to any one of the preceding claims,
**characterized in that**
the adjustment system (5) has exactly two adjustment devices (53, 53'), wherein the first adjustment device (53) engages the sealing frame (4) at its foot end (44) and the second adjustment device (53') engages the sealing frame (4) approximately in the middle between the head end (43) and the foot end (44) of the sealing frame (4).

11. The regenerative heat exchanger (1) according to any one of claims 3 to 10,
**characterized in that**
the height (H) and/or width (B) of the reinforcement device (6) changes such that the geometrical moment of inertia of the sealing frame (4) is essentially constant in its radial direction (R).

## Revendications

1. Echangeur de chaleur régénératif (1) avec un accumulateur de chaleur configuré comme un rotor (2), qui est monté rotatif autour d'un axe central de rotation (A), un boîtier fixe (3) entourant le rotor (2), et des moyens d'étanchéité pour le rotor (2), comprenant au moins un cadre d'étanchéité (4) s'étendant dans la direction radiale du rotor (2) et s'élargissant vers une face extérieure du rotor (2) et comprenant un dispositif de renfort (6), le cadre d'étanchéité (4) étant en particulier disposé entre un secteur (11) destiné aux effluents gazeux et un secteur (12, 13) destiné à l'air, et avec un système de réglage (5) destiné au réglage d'un écartement entre le cadre d'étanchéité (4) et le rotor (2), le système de réglage (5) comprenant au moins deux dispositifs de réglage (53, 53') raccordés au cadre d'étanchéité (4) afin de courber le cadre d'étanchéité (4) dans la direction axiale,
***caractérisé en ce que***
le dispositif de renfort (6) est configuré de telle manière que le moment géométrique d'inertie du cadre d'étanchéité (4) soit sensiblement constant dans sa direction radiale (R), et ***en ce que*** lesdits au moins deux dispositifs de réglage (53, 53') pour courber le cadre d'étanchéité (4) dans la direction axiale soient réglables dans des directions axiales opposées l'une par rapport à l'autre et/ou agissent sur le cadre d'étanchéité (4) dans des directions opposées l'une par rapport à l'autre.

2. Echangeur de chaleur régénératif (1) selon la revendication 1,
***caractérisé en ce que***
le dispositif de renfort (6) comprend au moins une bande de renfort (61) s'étendant dans la direction radiale (R) et disposée sur la face extérieure (42) du cadre d'étanchéité (4) côté opposé au rotor (2).

3. Echangeur de chaleur régénératif (1) avec un accumulateur de chaleur configuré comme un rotor (2), qui est monté rotatif autour d'un axe central de rotation (A), un boîtier fixe (3) entourant le rotor (2), et des moyens d'étanchéité pour le rotor (2), comprenant au moins un cadre d'étanchéité (4) s'étendant dans la direction radiale du rotor (2) et s'élargissant vers une face extérieure du rotor (2), et comprenant un dispositif de renfort (6), le cadre d'étanchéité (4) étant en particulier disposé entre un secteur (11) destiné aux effluents gazeux et un secteur (12, 13) destiné à l'air, et avec un système de réglage (5) destiné au réglage d'un écartement entre le cadre d'étanchéité (4) et le rotor (2),
***caractérisé en ce que***
le dispositif de renfort (6) comprend au moins une bande de renfort (61) s'étendant dans la direction radiale et ayant une hauteur (h) et/ou une largeur (B) qui diminue vers l'extérieur dans la direction radiale (R).

4. Echangeur de chaleur régénératif (1) selon la revendication 2 ou 3,
***caractérisé en ce que***
ladite au moins une bande de renfort (61) s'étend d'une extrémité de tête (43) du cadre d'étanchéité (4) adjacente à l'axe de rotation (A) vers une extrémité extérieure de pied (44) du cadre d'étanchéité (4) et s'étend de manière préférée de manière continue sur toute la longueur radiale du cadre d'étanchéité (4).

5. Echangeur de chaleur régénératif (1) selon l'une quelconque des revendications 2 à 4,
***caractérisé en ce que***
trois bandes de renfort (61, 62, 63) sont présentes, dont deux (62, 63) s'étendent le long des côtés extérieurs du cadre d'étanchéité (4) et une troisième (61) s'étend essentiellement de manière équidistante entre les deux bandes de renfort extérieures.

6. Echangeur de chaleur régénératif (1) selon l'une quelconque des revendications 2 à 5,
***caractérisé en ce que***
la hauteur (H) et/ou la largeur (B), et en particulier uniquement la hauteur (H), de ladite au moins une bande de renfort (61) diminue à mesure que la distance par rapport à l'extrémité de tête (43) augmente.

7. Echangeur de chaleur régénératif (1) selon la revendication 6,
***caractérisé en ce que***
la hauteur (H) et/ou la largeur (B) de ladite au moins une bande de renfort (61) diminue de manière continue.

8. Echangeur de chaleur régénératif (1) selon la revendication 6,
***caractérisé en ce que***
la hauteur (H) de ladite au moins une bande de renfort (61) diminue par paliers et ladite au moins une bande de renfort (61) est constituée de multiples sections de hauteurs constantes différentes (H1 à H5).

9. Echangeur de chaleur régénératif (1) selon l'une quelconque des revendications 1 à 8,
***caractérisé en ce que***
le cadre d'étanchéité (4) est configuré de manière essentiellement trapézoïdale, de manière préférée de façon telle qu'il recouvre le même nombre de cellules (91) dans chaque bague (9) du rotor (2) lorsque le rotor (2) a une pluralité de parois radiales (7) et des éléments de stockage intermédiaire (8) qui forment une structure de bagues concentriques subdivisées en cellules (91).

10. Echangeur de chaleur régénératif (1) selon l'une quelconque des revendications précédentes,
***caractérisé en ce que***
le système de réglage (5) possède exactement deux dispositifs de réglage (53, 53'), le premier dispositif de réglage (53) engageant le cadre d'étanchéité (4) au niveau de son extrémité de pied (44) et le second dispositif de réglage (53') engageant le cadre d'étanchéité (4) approximativement au milieu entre l'extrémité de tête (43) et l'extrémité de pied (44) du cadre d'étanchéité (4).

11. Echangeur de chaleur régénératif (1) selon l'une quelconque des revendications 3 à 10,
***caractérisé en ce que***
la hauteur (H) et/ou la largeur (B) du dispositif de renfort (6) change de telle sorte que le moment géométrique d'inertie du cadre d'étanchéité (4) soit essentiellement constant dans sa direction radiale (R).
